# FASCICULE DE BREVET EUROPEEN

(11) **EP 1 026 935 B1**
(45) Date de publication et mention de la délivrance du brevet: **30.01.2002**
(21) Numéro de dépôt: 98952819.5
(22) Date de dépôt: 29.10.1998
(51) Int. Cl.: A01F 25/14, B65B 43/34

(54) **BANC D'ETIRAGE POUR GAINE PLASTIQUE ET MACHINE COMPORTANT UN TEL BANC**
STRECKWERK FÜR PLASTIKHÜLLE UND MASCHINE MIT EINEM SOLCHEN STRECKWERK
DRAWING FRAME FOR PLASTIC SHEATH AND MACHINE COMPRISING SAME

(30) Priorité: 30.10.1997 FR 9713884; 11.08.1998 FR 9810362
(43) Date de publication de la demande: 16.08.2000
(73) Titulaire: LUCAS G, 85130 La Verrie (FR)
(72) Inventeur: LUCAS, Gérard, F-85130 La Verrie (FR); RETAILLAUD, Jean-Claude, F-85130 la Verrie (FR)
(74) Mandataire: Michelet, Alain
(86) Numéro de dépôt international: FR9802323
(87) Numéro de publication internationale: WO9922584

(56) Documents cités:
- EP-A- 0 789 993
- GB-A- 2 227 220
- US-A- 5 385 002
- US-A- 5 619 839

## Description

La présente invention concerne un banc d'étirage pour gaine en matériau plastique du genre polyéthylène à mémoire de forme, à grande déformation élastique.

Ce banc d'étirage est par exemple utilisable sur une engaineuse et en particulier une machine qui permet de réaliser un silo avec des balles de végétaux, fourrage ou autre.

Ce type de machine comme celle décrite notamment dans le document US-5 220 772 pour des balles rondes ou EP-0 789 993 pour des balles parallélépipédiques, comprend généralement un cadre polygonal approprié, associé à un bâti dont la dimension est telle qu'elle permet le passage de la balle de fourrage. Ce cadre comporte des organes extenseurs constitués - de supports en porte-à-faux sur lesquels est stockée la gaine plastique, et - de vérins qui déplacent radialement lesdits supports pour accroître suffisamment le périmètre de ladite gaine afin de pouvoir introduire les balles à l'intérieur de cette dernière. La gaine se dévide autour desdites balles, au fur et à mesure de leur introduction, formant une sorte de saucisson.

La disposition radiale des organes d'extension fait que les machines de ce genre sont particulièrement encombrantes et que, du fait de la présence d'un cadre polygonal immuable, elles ne sont pas adaptées à des balles de gabarits différents.

Selon l'invention, la gaine peut-être stockée sur des supports montés sur des bras en forme de col de cygne, lesquels supports sont disposés et/ou guidés par rapport à un bâti fixe de façon à former une embouchure polygonale, et l'un au moins de ces supports est mobile, soumis à des moyens de déplacement qui provoquent une extension du périmètre de la gaine au niveau de ladite embouchure, lesquels moyens de déplacement sont constitués de vérins arc-boutés entre deux supports mobiles consécutifs et pour certains entre un support mobile et le bâti, quelle que soit la forme de ladite embouchure.

Selon une disposition préférentielle de l'invention, le bâti se présente sous la forme d'une poutre horizontale comportant, d'une part, disposés symétriquement par rapport au plan vertical médian du polygone formé par la gaine - des supports fixes solidaires de ladite poutre et. - deux structures latérales, articulées sur ladite poutre horizontale, à proximité des supports fixes, et sur lesquelles structures sont guidés le ou les supports mobiles, et, d'autre part, des vérins formant, autour de l'embouchure, un cadre fermé sur ladite poutre, arc-boutés entre eux à partir de cette dernière et sur le ou lesdits supports mobiles.

Toujours selon l'invention, dans le cas d'un banc d'étirage pour balles rondes, chaque structure latérale est par exemple en forme de dièdre, constituée de deux poutres formant glissières faisant un angle de l'ordre de 120° pour le cas d'une embouchure et d'un cadre de forme hexagonale : - une première poutre articulée à l'une de ses extrémités sur la poutre horizontale du bâti à proximité de chaque support fixe, - une seconde poutre montée coulissante à l'une de ses extrémités sur la première, comportant un support mobile situé dans le plan bissecteur de l'angle formé par lesdites première et seconde poutres, - un coulisseau à l'extrémité de la seconde poutre comportant un autre support mobile.

Toujours selon une disposition préférentielle de l'invention, le cadre hexagonal est constitué - de deux structures latérales en forme de dièdres et deux vérins dans chaque dièdre, plus - un vérin qui s'étend entre les extrémités des deux structures latérales à leur partie supérieure, interposés entre les coulisseaux disposés aux extrémités des secondes poutres desdites structures, et - de la poutre horizontale du bâti qui fait office de sixième côté.

Dans le cas de balles carrées, le banc selon l'invention comporte des structures latérales en forme de simples poutres articulées de part et d'autre des supports inférieurs fixes, sur la poutre horizontale du bâti, chaque poutre sert de guide à un coulisseau qui est équipé d'un support de gaine, lesquels coulisseaux sont reliés entre eux par un vérin horizontal et sont reliés au bâti chacun par un vérin et le cadre est formé : de ladite poutre horizontale, des poutres latérales et du vérin supérieur horizontal.

Toujours selon l'invention, les structures latérales du banc sont reliées entre elles par une sorte de palonnier qui les maintient chacune dans une position qui fait qu'elles sont constamment symétriques l'une par rapport à l'autre par rapport au plan vertical médian passant par l'axe longitudinal du banc, c'est-à-dire l'axe d'introduction des balles ; lequel palonnier se présente sous la forme d'un axe transversal guidé sur le bâti du banc et muni à ses extrémités latérales de bras parallèles entre eux et dont l'extrémité de chacun est solidaire au moyen d'une liaison appropriée de la structure latérale correspondante.

Selon une autre disposition de l'invention, les supports de la gaine plastique sont montés sur des bras en forme de col de cygne afin de placer la gaine stockée dans le plan des vérins et des glissières, chaque bras est solidaire d'un coulisseau ou du bâti, et chaque support comprend une palette fixe en forme de portion de cylindre.

L'invention concerne également une machine d'engainage de balles de végétaux qui comporte un banc d'étirage tel que décrit précédemment et un poste de commande hydraulique des différents vérins qui sont alimentés à partir d'une centrale autonome ou à partir d'une centrale disposée sur un engin agricole du genre tracteur.

Ce banc d'étirage peut être utilisé aussi bien sur une machine d'engainage autonome c'est-à-dire munie de son propre poussoir comme décrit dans le document CA-2 111 546, que sur une machine plus simple pour laquelle les balles sont poussées directement par l'engin de chargement.

Toujours selon l'invention, cette machine comporte un bâti monté sur des roues de transport et ce bâti comporte également, du côté du silo c'est-à-dire des balles engainées, des longerons munis d'organes en forme de patins et/ou de roues adaptées selon la nature du sol, et munies éventuellement de bêches qui permettent de retenir la machine et d'éviter son recul lors de l'introduction des balles dans l'embouchure de la gaine.

Selon une autre disposition de l'invention, les points d'ancrage des vérins de manoeuvre sont multiples, de façon à pouvoir adapter facilement la dimension de l'embouchure et du cadre, au gabarit des balles à engainer

L'invention sera encore détaillée à l'aide de la description suivante et des dessins annexés, donnés à titre indicatif, et dans lesquels :
- la figure 1 est une vue de face schématique du banc d'étirage selon l'invention, pour l'engainage de balles rondes ;
- la figure 2 est une vue schématique selon 2-2 de la figure 1 ;
- la figure 3 est une vue schématique de face du banc selon l'invention pour des balles parallélépipédiques ;
- la figure 4 est une vue schématique selon 4-4 de la figure 3 ;
- la figure 5 est une vue simplifiée en perspective montrant le système de palonnier qui permet d'associer les structures latérales du banc afin de tes maintenir dans une même position, symétriquement par rapport au plan vertical médian du banc ;
- la figure 6 représente schématiquement le banc vu de dessus ;
- la figure 7 représente un bras-support sur lequel est posée la gaine plastique ;
- la figure 8 représente une poutre coulissante du banc représenté figure 1.

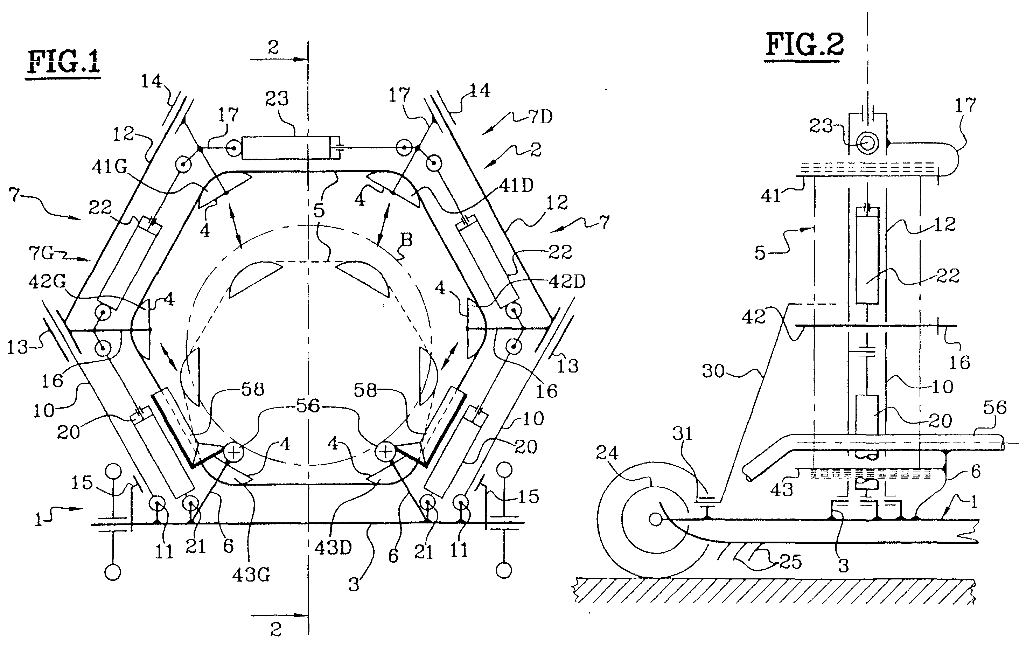

Le banc d'étirage représenté schématiquement figures 1 et 2 comprend un bâti 1 monté par exemple sur des roues, lequel bâti supporte un cadre 2 déployable qui s'étend, à partir de la poutre transversale horizontale 3 dudit bâti, dans un plan qui est vertical et perpendiculaire au sens d'introduction des balles « B » dans ledit cadre en vue de réaliser l'engainage desdites balles.

L'engainage s'effectue au moyen d'une gaine en matériau plastique du genre polyéthylène étirable à mémoire de forme c'est-à-dire à déformation élastique. Cette gaine est stockée sur des supports 4, répartis dans les angles d'un polygone ; elle est par exemple disposée en nappes superposées formant un tube de section quasi hexagonale. Ce type de gaine 5 supporte un étirement élastique de l'ordre de 30 % au moins.

L'étirage de la gaine 5 ainsi stockée s'effectue par un déplacement radial des supports 4 et, en particulier dans l'exemple de réalisation de la figure 1, par un déplacement de quatre des supports 4 : les supports supérieurs 41 situés pour l'un à droite (41D) et pour l'autre à gauche (41G) et les supports intermédiaires latéraux 42D et 42G. Les supports inférieurs 43D et 43G sont fixes ; ils sont solidaires de la poutre horizontale 3 du bâti 1, par l'intermédiaire des bras 6.

Tous les supports 4 sont disposés symétriquement par rapport au plan vertical médian du bâti 1.

Le cadre hexagonal 2 comprend à sa partie inférieure un côté formé par la poutre horizontale 3 du bâti 1. Il comprend aussi une paire de structures latérales 7 en forme de dièdres qui font office de glissières. Ces structures 7D et 7G sont formées par une première poutre 10 articulée à l'une de ses extrémités autour d'un axe 11 sur la poutre 3 du bâti 1, et d'une seconde poutre 12 qui est montée coulissante à l'une de ses extrémités sur ladite première poutre 10, au moyen d'un coulisseau 13. L'angle au sommet du dièdre est de l'ordre de 120° dans l'exemple de la figure 1.

A l'extrémité de la seconde poutre 12 on trouve un coulisseau 14.

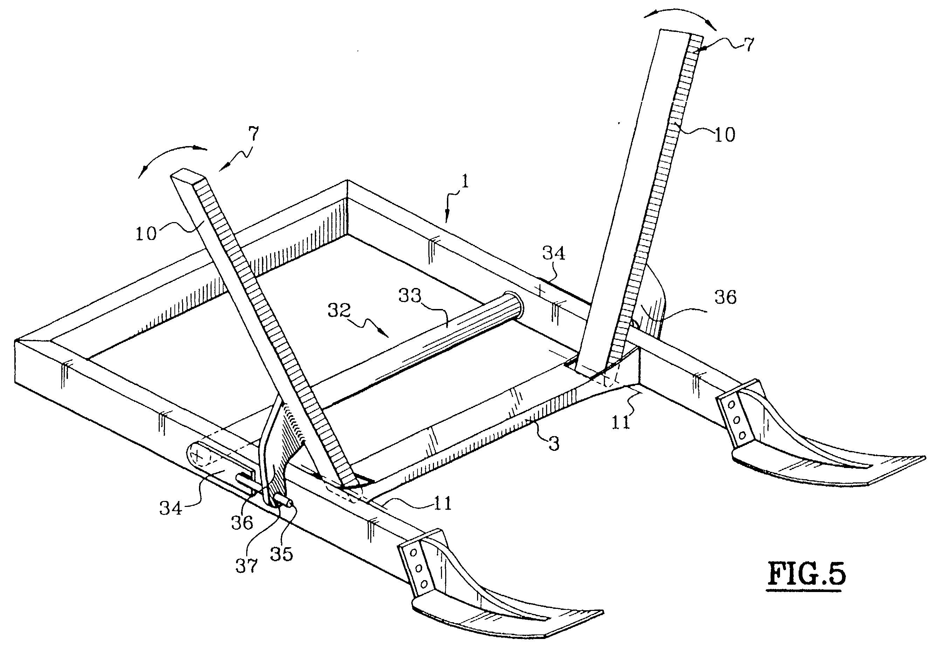

Le mouvement de la première poutre 10 autour de son axe 11 est par exemple limité au moyen de butées 15 qui sont solidaires du bâti 1 et situées de part et d'autre desdites poutres 10 ; d'autres moyens seront également détaillés plus loin en liaison avec la figure 5.

Le support 42(D et G) est solidaire de la seconde poutre 12 et en particulier de son coulisseau 13 au moyen d'un bras radial 16. Ce bras 16 se situe sensiblement dans le plan médian du dièdre formé par les structures 7.

Le support 41(D et G) est solidaire du coulisseau 14 au moyen d'un bras radial 17 qui se situe dans un plan qui fait un angle de l'ordre de 60° avec la seconde poutre 12.

Le mouvement des différents supports 41G, 42G et leurs homologues 41D et 42D, s'effectue au moyen de vérins arc-boutés d'une part, sur les bras 16 et 17 qui portent respectivement lesdits supports 41 et 42 et, d'autre part, sur la poutre 3.

On trouve un premier vérin 20 parallèle à la première poutre 10 ; ce vérin est articulé autour d'un axe 21 à partir de la poutre 3 du bâti 1. A la suite de ce vérin 20, on trouve un second vérin 22. Ces deux vérins 20 et 22 sont solidaires du bras 16 qui porte le support 42 et ils forment entre eux un angle similaire à celui du dièdre formé par chaque structure 7. Le vérin 22 est aussi solidaire du bras 17 qui porte le support 41. Les bras 17 installés sur les coulisseaux 14 des dièdres 7D et G, sont reliés entre eux par un vérin 23 qui s'étend horizontalement au-dessus du bâti 1.

Les vérins 22 et 23 sont arc-boutés sur chaque bras 17. à droite et à gauche.

Les différents vérins 20, 22 situés à droite et à gauche et le vérin supérieur 23, forment une boucle polygonale qui est fermée sur la poutre 3. Un tel montage permet de mieux équilibrer les efforts lors de l'extension de la gaine 5 au moyen des supports 4, et de façonner une embouchure de forme régulière, établie lorsque les vérins sont en fin de course et bloqués dans cette position.

Ces vérins sont alimentés à partir d'un poste de commande non représenté qui comprend soit une centrale autonome d'alimentation hydraulique, soit une liaison appropriée qui est raccordée à la centrale hydraulique d'un tracteur agricole.

L'opération d'étirage s'effectue une fois pour toutes après l'installation de la gaine sur les supports 4. Les supports 41, 42, 43 sont maintenus en position écartée par les vérins 20, 22, 23 jusqu'au dévidage complet de la gaine 5. Pendant l'opération d'engainage, le banc d'étirage est totalement passif ; les différents vérins sont sous pression, bloqués, et les supports 41, 42 sont en position d'extension, verrouillés par lesdits vérins.

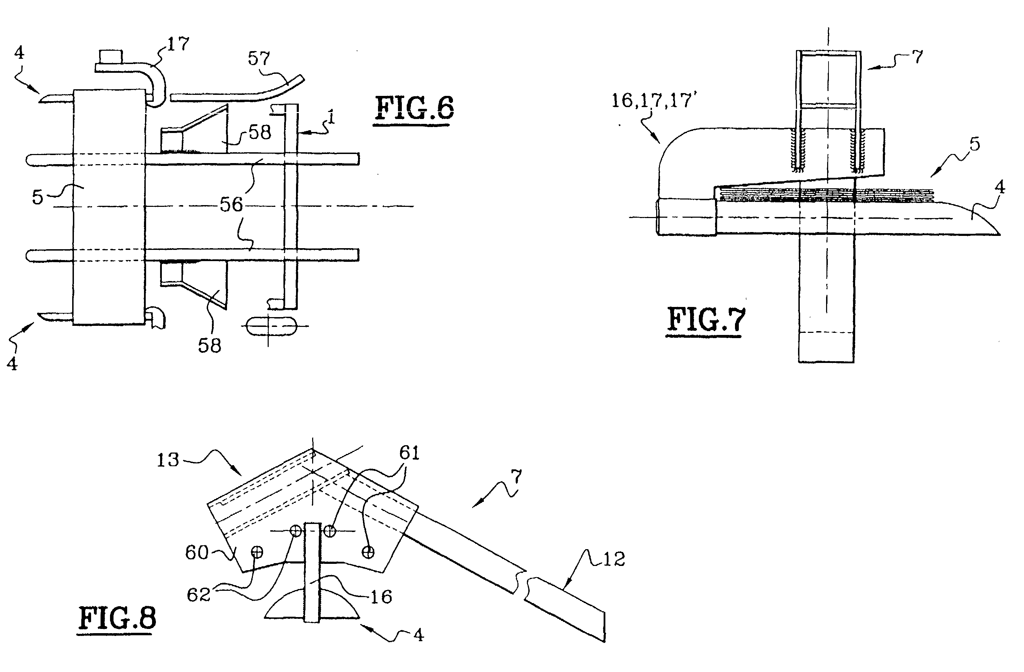

La figure 2 montre schématiquement le bâti 1 porté par des patins ou roues 24 avec, éventuellement, des bêches 25 qui font office d'organe anti-recul. Chaque support inférieur 43 est solidaire de la poutre transversale 3 du bâti 1. Il est surmonté par le support 42 disposé à mi-hauteur du cadre et le support 41 situés à la partie supérieure. Les différents supports 43, 42, 41 sont portés respectivement par des bras 6, 16 et 17 en forme de col de cygne pour permettre l'installation et le stockage de la gaine 5. Ces montages en col de cygne seront détaillés plus loin en liaison avec la figure 7.

Toujours figure 2, on remarque la première poutre 10 articulée sur la poutre 3 du bâti 1, et la seconde poutre 12.

La première poutre 10 peut être associée à un raidisseur 30 qui s'étend depuis l'extrémité supérieure de ladite poutre, jusqu'à un axe d'articulation 31 disposé sur le bâti 1. Ce raidisseur 30 permet de rigidifier le banc et de limiter la flexion de sa partie supérieure lors du dévidage de la gaine 5 notamment.

On trouve également, dans le même plan transversal que celui des poutres 10 et 12, les vérins 20, 22 et 23.

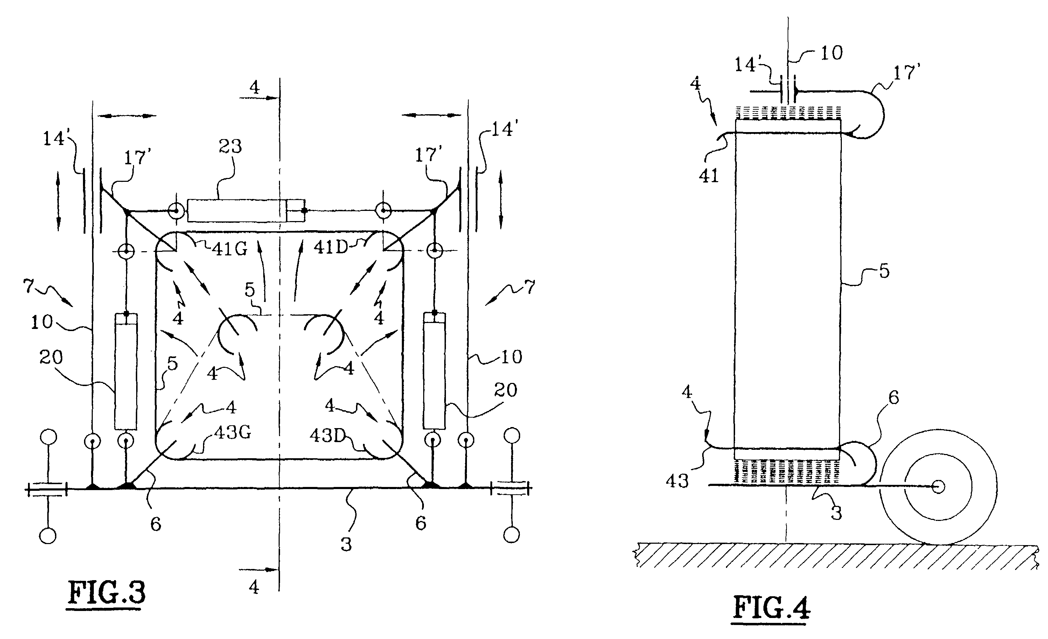

La figure 3 montre une variante de réalisation du banc d'étirage, plus particulièrement adaptée à l'engainage de balles qui se présentent sous la forme d'un parallélépipède rectangle dont la section est carrée ou rectangulaire.

On retrouve sur ce banc la même technologie que celle développée figure 1 pour les balles rondes. Pour ce banc, les structures latérales 7 sont simplement constituées de poutres 10 qui forment des glissières pour des coulisseaux 14'. Les coulisseaux 14' sont reliés entre eux à leur partie supérieure au moyen d'un vérin 23 et ils sont reliés à la poutre 3 du bâti 1 au moyen de vérins latéraux 20.

La gaine 5 est disposée sur des supports 4 comme précédemment : des supports supérieurs 41D et G et des supports inférieures 43D et G. Les supports 41D et 41G sont solidaires des coulisseaux 14' par le biais des bras 17'. Les supports 43D et G sont fixes et solidaires de la poutre transversale 3 par le biais de bras 6.

En position normale d'extension, le cadre du banc d'étirage est constitué de la poutre horizontale inférieure 3, des poutres latérales verticales 10 et du vérin supérieur 23 positionné horizontalement. Les quatre supports 4 sont disposés en carré et tendent la gaine 5 dans une position telle qu'elle peut accueillir des balles parallélépipédiques de section carrée.

La figure 4 montre schématiquement le banc d'étirage représenté figure 3. On retrouve la gaine plastique 5 tendue entre les supports 4 et en particulier les supports inférieurs 43 et supérieurs 41. Les supports supérieurs 41 sont solidaires du coulisseau 14' qui est guidé sur les poutres latérales 10.

La figure 5 représente, schématiquement et d'une façon simplifiée, le bâti 1 du banc d'étirage avec la poutre 3 sur laquelle sont articulées les structures latérales 7 du banc selon la figure 3 ou la figure 1.

Les structures latérales 7 constituées notamment des poutres 10, sont solidarisées l'une à l'autre au moyen d'une sorte de palonnier 32 qui comprend un axe transversal 33 guidé de chaque côté du bâti 1. Cet axe 33 comporte à chacune de ses extrémités, un bras 34 dont l'extrémité 35 coopère avec des platines 36 fixées à l'extrémité inférieure des poutres 10. L'extrémité 35 se présente par exemple sous la forme d'un axe et coopère avec un orifice circulaire 37 aménagé à l'extrémité inférieure de la platine 36, formant une articulation sommaire.

Les bras 34 sont en forme de tôle et présentent une certaine souplesse de façon à tolérer la variation d'entraxe des orifices 37 lors du mouvement des poutres 10 autour de leur axe d'articulation 11.

Ainsi, les structures latérales 7 du banc sont solidarisées par l'intermédiaire du palonnier 32 et conservent, en permanence, une position qui est symétrique par rapport au plan vertical longitudinal et médian du banc aussi bien dans le cas de la figure 1 que de la figure 2.

La figure 6 montre, vus de dessus schématiquement, les principaux éléments d'une machine d'engainage. Ainsi, on retrouve le bâti 1 porté par des roues, le banc d'étirage de la gaine 5, laquelle gaine est tendue par les supports 4. Cette machine comporte, solidaires du bâti 1, deux rails 56 qui font office de guides pour la balle qui est destinée à passer dans le banc d'étirage et à être enveloppée par la gaine 5.

Pour éviter toute interférence entre la balle et la gaine plastique 5, des guides complémentaires 57 peuvent être disposées à mi-hauteur, par exemple au niveau des supports 42. La balle peut également être centrée à sa partie inférieure au moyen de guides 58 en forme de portions d'entonnoir qui présentent aussi l'avantage de protéger la partie inférieure de la gaine 5.

Les guides 58 apparaissent également figure 1 et on remarque, qu'en position active normale, la gaine 5 se situe en retrait de ces guides 58, protégée de tout contact avec la balle B.

La figure 7 montre un support 4 monté sur un bras 16, 17 ou 17', en forme de col de cygne. Le support 4 se présente sous la forme d'une portion de cylindre dont le diamètre est de l'ordre de 150 à 250 mm par exemple constituant une sorte de palette sur laquelle repose la gaine 5. L'extrémité aval du support 4 est arrondie pour éviter de déchirer la gaine 5 lors de son extraction pour l'engainage.

La figure 8 montre un élément de la structure 7. Cet élément de la structure 7 correspond sur le dessin, figure 1, à la poutre 12, muni du coulisseau 13 et sur lequel est fixé le bras 16 qui porte le support 4. On remarque, sur les flasques 60 interposés entre la poutre 12 et le coulisseau 13, et sur l'un desquels est monté le bras 16, les perçages 61 et 62, qui permettent de monter des vérins et en particulier les vérins 20 et 22.

Les perçages 61, 62, comme représenté figure 8, sont au nombre de deux, ou plus selon les besoins, pour chaque vérin, de façon à modifier la course des supports 4 afin d'adapter facilement l'embouchure du banc d'étirage aux différents gabarits de balles à engainer.

Cette possibilité d'ancrer les vérins 20, 22, 23 en différentes positions peut se retrouver sur les bras 6, sur les coulisseaux 13 et 14 du banc d'étirage pour balles rondes et sur les coulisseaux 14' du banc d'étirage pour balles parallélépipédiques.

## Revendications

1. Banc d'étirage pour gaine plastique (5) repliée sur elle-même en couches superposées, et stockée sur des supports (4), le banc d'étirage comportent des supports (4) montés sur des bras en forme de col de cygne, lesquels supports sont disposés et guidés par rapport à un bâti (1) de façon à former une embouchure polygonale et, l'un au moins de ces supports est mobile, soumis à des moyens de déplacement qui provoquent une extension du périmètre de ladite gaine, **caractérisé en ce que** lesdits moyens de déplacement sont constitués de vérins (20, 22, 23) arc-boutés entre deux supports (4) mobiles consécutifs et pour certains entre un support(4) mobile et ledit bâti (1).

2. Banc d'étirage selon la revendication 1, **caractérisé en qu'**il comporte - un bâti (1) en forme de poutre horizontale (3) sur laquelle sont disposés symétriquement par rapport au plan vertical médian du polygone formé par la gaine (5), des supports (43) fixes, solidaires dudit bâti et - deux structures latérales (7) articulées sur ledit bâti, sur lesquelles sont guidés les supports (4).

3. Banc d'étirage selon la revendication 2, **caractérisé en ce que** les structures latérales (7) sont constituées de deux poutres formant un dièdre dont l'angle est de l'ordre de 120° : - une première poutre (10) articulée sur le bâti (1) à l'une de ses extrémités, - une seconde poutre (12) montée coulissante à l'une de ses extrémités sur la première poutre, portant un support (42) situé dans l'angle dudit dièdre, - un coulisseau (14) guidé sur la longueur de la seconde poutre, portant un autre support (41).

4. Banc d'étirage selon la revendication 3, **caractérisé en ce qu'**il comporte - deux vérins (20, 22) disposés dans chaque dièdre de part et d'autre du bras (16) qui porte le support (42) et - un vérin (27) qui s'étend entre les extrémités supérieures des deux structures (7) en forme de dièdres, et qui vient s'arc-bouter avec le vérin (22) dudit dièdre sur le bras (17) du coulisseau (14), qui porte le support (41).

5. Banc d'étirage selon la revendication 2, **caractérisé en ce qu'**il comporte des structures latérales (7) en forme de simples poutres (10) articulées de part et d'autre des supports inférieurs fixes (43) sur la poutre (3) du bâti (1), chaque poutre latérale (10) sert de guide à un coulisseau (14') qui est équipé d'un support (4), lesquels coulisseaux sont reliés entre eux par un vérin horizontal (23) et reliés au bâti (1) et en particulier à la poutre (3). chacun par un vérin (20).

6. Banc d'étirage selon l'une quelconque des revendications 2 à 5, **caractérisé en ce qu'**il comporte une sorte de palonnier (32) qui relie et maintient les structures latérales (7) du banc, lesquelles structures et en particulier les poutres (10), sont maintenues chacune dans une position qui fait qu'elles sont constamment symétriques l'une par rapport à l'autre par rapport au plan vertical médian passant par l'axe longitudinal du banc, lequel palonnier se présente sous la forme d'un axe transversal (3) guidé sur le bâti (1), lequel axe est muni à ses extrémités latérales de bras parallèles entre eux (34) dont l'extrémité de chacun est solidaire au moyen d'une liaison appropriée de la poutre (10) correspondante.

7. Banc d'étirage selon l'une quelconque des revendications 1 à 6, **caractérisé en ce que** chaque support (4) est monté sur les coulisseaux et sur le bâti au moyen d'un bras en forme de col de cygne qui permet de placer le plan médian radial de la gaine stockée dans le plan des structures latérales et des différents vérins et glissières formées par les poutres (10, 12).

8. Banc d'étirage selon l'une quelconque des revendications 1 à 6, **caractérisé en ce que** chaque support (4) est constitué d'une portion de cylindre dont le diamètre de l'enveloppe est de l'ordre de 150 à 250 mm, laquelle portion forme une palette qui se termine par un arrondi.

9. Machine d'engainage de balles de végétaux du genre fourrage, pour former un silo longitudinal, **caractérisée en ce qu'**elle comporte un banc d'étirage selon l'une quelconque des revendications 1 à 8 et un poste de commande hydraulique des différents vérins qui sont alimentés à partir d'une centrale autonome ou à partir d'une centrale d'un véhicule du genre tracteur.

10. Machine d'engainage selon la revendication 9, **caractérisé en ce que** le bâti (1) est associé à des roues de transport et comporte du côté de l'engainage, des patins ou roues (24) et, éventuellement, des bêches (25) pour éviter son recul, lesquelles roues facilitent son déplacement au fur et à mesure de l'engainage.

11. Machine d'engainage selon l'une quelconque des revendications 1 à 10, **caractérisée en ce que** les points d'ancrage des vérins de manoeuvre des supports (4) sont multiples de façon à pouvoir adapter facilement la dimension de l'embouchure et du cadre, au gabarit des balles à engainer.

## Patentansprüche

1. Streckwerk für eine Kunststoffhülle (5), die in übereinanderliegenden Schichten gefaltet und auf Stützen (4) gelagert ist, wobei das Streckwerk Stützen (4) umfasst, die auf schwanenhalsförmigen Armen montiert sind, welche Stützen in bezug auf ein Gehäuse (1) derart angeordnet und geführt sind, daß sie eine polygonale Öffnung bilden, wobei mindestens eine dieser Stützen beweglich und Verschiebemitteln unterworfen ist, die eine Erweiterung des Umfanges der Hülle hervorrufen, **dadurch gekennzeichnet, daß** die Verschiebemittel aus Zylindern (20, 22, 23) gebildet sind, die zwischen zwei aufeinanderfolgenden, beweglichen Stützen (4) und einige von ihnen zwischen einer beweglichen Stütze (4) und dem Gehäuse (1) spreizend gehalten sind.

2. Streckwerk nach Anspruch 1, **dadurch gekennzeichnet, daß** es ein Gehäuse (1) in Form eines horizontalen Trägers (3) umfasst, auf dem in bezug auf die vertikale Mittelebene des von der Hülle (5) gebildeten Polygons symmetrisch feststehende Stützen (43), die mit dem Gehäuse fest verbunden sind, und zwei seitliche Aufbauten (7), die auf dem Gehäuse angelenkt sind, auf denen die Stützen (4) geführt werden, angeordnet sind.

3. Streckwerk nach Anspruch 2, **dadurch gekennzeichnet, daß** die seitlichen Aufbauten (7) aus zwei Trägern gebildet sind, die ein Dieder mit einem Winkel von ungefähr 120° bilden : - einem ersten Träger (10), der auf dem Gehäuse (1) an einem seiner Enden angelenkt ist, - einem zweiten Träger (12), der gleitend an einem seiner Enden auf dem ersten Träger montiert ist, der eine im Winkel des Dieders befindliche Stütze (42) trägt,-einem Schieber (14), der über die Länge des zweiten Trägers geführt wird und eine weitere Stütze (41) trägt.

4. Streckwerk nach Anspruch 3, **dadurch gekennzeichnet, daß** es zwei Zylinder (20, 22), die in jedem Dieder beiderseits des Armes (16) angeordnet sind, der die Stütze (42) trägt, und einen Zylinder (27) umfasst, der sich zwischen den oberen Enden der beiden Aufbauten (7) in Form von Diedern erstreckt und mit dem Zylinder (22) des Dieders auf dem Arm (17) des Schiebers (14), der die Stütze (41) trägt, spreizend gehalten ist.

5. Streckwerk nach Anspruch 2, **dadurch gekennzeichnet, daß** es seitliche Aufbauten (7) in Form einfacher Träger (10) umfasst, die beiderseits der unteren feststehenden Stützen (43) auf dem Träger (3) des Gehäuses (1) angelenkt sind, wobei jeder seitliche Träger (10) als Führung für einen Schieber (14) dient, der mit einer Stütze (4) versehen ist, welche Schieber miteinander durch einen horizontalen Zylinder (23) und mit dem Gehäuse (1) und insbesondere mit dem Träger (3) jeweils durch einen Zylinder (20) verbunden sind.

6. Streckwerk nach einem der Ansprüche 2 bis 5, **dadurch gekennzeichnet, daß** es eine Art Steuerhebel (32) umfaßt, der die seitlichen Aufbauten (7) des Streckwerkes verbindet und hält, dass die Aufbauten und insbesondere die Träger (10) jeweils in einer Position gehalten werden, die bewirkt, daß es in bezug auf die vertikale Mittelebene, die durch die Längsachse des Streckwerks verläuft, zueinander konstant symmetrisch sind, dass der Steuerhebel in Form einer auf dem Gehäuse (1) geführten Querachse (3) vorhanden ist und dass die Querachse an ihren seitlichen Enden mit zueinander parallelen Armen (34) versehen ist, deren Ende jeweils mit Hilfe einer entsprechenden Verbindung mit dem entsprechenden Träger (10) fest verbunden ist.

7. Streckwerk nach einem der Ansprüche 1 bis 6, **dadurch gekennzeichnet, daß** jede Stütze (4) auf den Schiebern und auf dem Gehäuse mit Hilfe eines schwanenhalsförmigen Armes montiert ist, der es ermöglicht, die radiale Mittelebene der gelagerten Hülle in der Ebene der seitlichen Aufbauten und der verschiedenen Zylinder und der von den Trägern (10, 12) gebildeten Gleitschienen zu platzieren.

8. Streckwerk nach einem der Ansprüche 1 bis 6, **dadurch gekennzeichnet, daß** jede Stütze (4) aus einem Zylinderabschnitt gebildet ist, dessen Umhüllungsdurchmesser ungefähr 150 bis 250 mm beträgt, welcher Abschnitt eine mit einer Abrundung endende Palette bildet.

9. Maschine zum Verpacken von Pflanzenballen von der Art Futtermittel zur Bildung eines Längssilos, **dadurch gekennzeichnet, daß** sie ein Streckwerk nach einem der Ansprüche 1 bis 8 und eine hydraulische Steuerstation für die verschiedenen Zylinder umfasst, wobei die Zylinder von einer autonomen Zentrale oder von einer Zentrale eines Fahrzeugs von der Traktorart gespeist werden.

10. Verpackungsmaschine nach Anspruch 9, **dadurch gekennzeichnet, daß** das Gehäuse (1) Transporträder aufweist und auf der Verpackungsseite mit Kufen oder Rollen (24) und, um sein Zurückfahren zu verhindern, eventuell mit Spornen (25), versehen ist, wobei die Transporträder seine Verschiebung im Zuge der Verpackung erleichtern.

11. Verpackungsmaschine nach einem der Ansprüche 1 bis 10, **dadurch gekennzeichnet, daß** die Befestigungspunkte für die Betätigungszylinder der Stützen (4) zahlreich vorhanden sind, um die Abmessung der Öffnung und des Rahmens an den Umfang der zu verpackenden Ballen. leicht anpassen zu können.

## Claims

1. A drawing frame for a plastic sheath (5), folded into several superimposed layers, and stored on supports (4) the drawing frame comprising the supports mounted on swan-neck arms, which supports are arranged and guided with respect to a main frame (1) in order to form a polygonal mouthpiece and, one at least of these supports is mobile, in connection with means of displacement that cause the perimeter of said sheath to expand, **characterized in that** said means of displacement consist of actuators (20, 22, 23) provided to rest between two following mobile supports (4) and for some of them between a mobile support (4) and said main frame (1).

2. A drawing frame according to claim 1, **characterized in that** it comprises - a main frame (1) in the form of a horizontal beam (3), on which are arranged symmetrically with respect to the median vertical plane of the polygon delineated by the sheath (5), fixed supports (43) integral with said frame and, - two lateral structures (7) linked on said main frame, on which the supports (4) are guided.

3. A drawing frame according to claim 2, **characterized in that** the lateral structures (7) consist of two beams forming a dihedron that delineates an angle of about 120°: - a first beam (10) linked on the main frame (1) at one of its ends, - a second beam (12) sliding mounted at one of its ends on the first beam, carrying a support (42) situated in the angle delineated by said dihedron, - a slide (14) guided over the whole length of the second beam, carrying another support (41).

4. A drawing frame according to claim 3, **characterized in that** it comprises - two actuators (20, 22) arranged in each dihedron on either side of the arm (16) that carries the support (42) and - an actuator (27) extending between the upper ends of both dihedral structures (7) and which rest on the actuator (22) of said dihedron on the arm (17) of the slide (14) that carries the support (41).

5. A drawing frame according to claim 2, **characterized in that** it comprises lateral structures (7) in the form of single beams (10) linked on either side of the fixed lower supports (43) on the beam (3) of the main frame (1), whereas each lateral beam (10) serves as a guide for a slide (14') that is provided with a support (4), whereby said slides are interconnected by a horizontal actuator (23) and are connected to the main frame (1), and in particular to the beam (3), each by an actuator (20).

6. A drawing frame according to any one of claims 2 to 5, **characterized in that** it comprises a kind of swingle-bar (32) that links and maintains the lateral structures (7) of the drawing frame, whereas said structures, and in particular the beams (10) are each maintained in such a position that they are constantly symmetrical with respect to one another and with respect to the median vertical plane going through the longitudinal axis of the drawing frame, whereby said swingle-bar has the shape of a transversal axle (3) guided on the main frame (1), which axle is provided at its lateral ends with arms parallel to one another (34) whose end of each is integral, by means of a suitable link, with the corresponding beam (10).

7. A drawing frame according to any one of claims 1 to 6, **characterized in that** each support (4) is mounted on the slides and on the main frame by means of a swan-neck arm that enables placing the radial median plane of the stored sheath onto the plane of the lateral structures and of the different actuators and sliding rails formed by the beams (10, 12).

8. A drawing frame according to any one of claims 1 to 6, **characterized in that** each support (4) consists of a cylindrical portion whose diameter of the envelope is about 150-250 mm, whereas said portion forms a pallet terminated by a rounded section.

9. A sheathing machine for bales of plants such as fodder, for making a longitudinal silo, **characterized in that** it comprises a drawing frame according to any one of claims 1 to 8 and a hydraulic control station of the different actuators that are power-supplied from a stand-alone plant or from a plant on-board a vehicle such as a tractor.

10. A sheathing machine according to claim 9, **characterized in that** the main frame (1) is connected to transport wheels and comprises on the sheathing side, pads or wheels (24) and, possibly, spades (25) for preventing said machine from reversing, whereby said wheels assist the displacement of the said machine during the sheathing operation.

11. A sheathing machine according to any one of claims 1 to 10, **characterized in that** the anchoring points of the handling actuators of the supports (4) are multiple, so that the size of the mouth piece and of the frame can be adapted easily to the gauge of the bales to be sheathed.
